# EUROPEAN PATENT SPECIFICATION

(11) **EP 1 052 463 B1**
(45) Date of publication and mention of the grant of the patent: **14.06.2006**
(21) Application number: 00108900.2
(22) Date of filing: 27.04.2000
(51) Int. Cl.: F25B 41/06, F25B 41/04

(54) **Expansion valve**
Entspannungsventil
Robinet détendeur

(30) Priority: 11.05.1999 JP 13031199; 30.09.1999 JP 27857099
(43) Date of publication of application: 15.11.2000
(73) Proprietor: Fujikoki Corporation, Tokyo (JP)
(72) Inventor: Katayama, Toshiharu, Setagaya-ku, Tokyo (JP); Watanabe, Kazuhiko, Setagaya-ku, Tokyo (JP)
(74) Representative: TER MEER - STEINMEISTER & PARTNER GbR

(56) References cited:
- EP-A- 0 714 004
- EP-A- 0 846 927
- DE-A- 19 625 885
- GB-A- 2 150 273
- US-A- 5 826 438
- PATENT ABSTRACTS OF JAPAN vol. 017, no. 633 (M-1513), 24 November 1993 (1993-11-24) & JP 05 196324 A (NIPPONDENSO CO LTD), 6 August 1993 (1993-08-06)
- PATENT ABSTRACTS OF JAPAN vol. 1998, no. 11, 30 September 1998 (1998-09-30) & JP 10 176864 A (TGK CO LTD), 30 June 1998 (1998-06-30)
- PATENT ABSTRACTS OF JAPAN vol. 1999, no. 03, 31 March 1999 (1999-03-31) & JP 10 325479 A (SAGINOMIYA SEISAKUSHO INC), 8 December 1998 (1998-12-08)
- PATENT ABSTRACTS OF JAPAN vol. 2000, no. 07, 29 September 2000 (2000-09-29) & JP 2000 097521 A (TGK CO LTD), 4 April 2000 (2000-04-04)

## Description

### FIELD OF THE INVENTION

The present invention relates to an expansion valve mounted on a vehicle for controlling the flow of a refrigerant travelling to an evaporator, wherein a bypass passage formed to the expansion valve is opened by an electromagnetic valve when the expansion valve is in a closed state, circulating a minimum amount of refrigerant so as to secure the lubrication of a compressor and the like constituting the refrigerant cycle.

### DESCRIPTION OF THE RELATED ART

Document JP 05 196324 A, which represents the closest state of the art, discloses an evaporating pressure control valve being arranged in a refrigerating cycle comprising a compressor, a condenser, a liquid receiver, an expansion valve and an evaporator. A bypass control valve is provided on a bypass pipe which connects the upstream side of the expansion valve and the downstream side of the evaporating pressure control valve. The bypass control valve controls the flow rate of refrigerant flowing from a first bypass port to a second bypass port in such a way that a piston is moved according to the pressure balance between the outlet pressure of the evaporating pressure control valve and the said pressure of a compression coil spring.

The expansion valve equipped in an air conditioner of a vehicle includes a valve chamber for controlling the flow of the refrigerant into which the refrigerant being supplied from a compressor is introduced, a first passage for guiding the refrigerant exiting the valve chamber toward an evaporator, and a second passage through which the refrigerant returning from the evaporator travels. A shaft-like valve drive member having a heat sensing function is equipped in the second passage for sensing the refrigerant temperature flowing thruogh the passage and for transmitting the sensed temperature to a valve drive mechanism called a power element. Further, the distance between a valve means and a valve seat of the expansion valve is operated so as to control the flow of the refrigerant.

### SUMMARY OF THE INVENTION

According to the above-mentioned type of expansion valves, when the air-conditioning load is low, the flow path between the valve means and the valve seat is nearly closed, and only very little refrigerant flows through the valve. A lubricating oil is included in the refrigerant, which lubricates the sliding units of the compressor and the like constituting the refrigeration cycle.

Therefore, if the flow of the refrigerant circulating in the refrigeration cycle is reduced greatly, it may cause malfunction of the equipment constituting the refrigeration cycle such as the compressor due to insufficient lubrication.

Accordingly, the present invention aims at providing an expansion valve capable of circulating a minimum amount of refrigerant even when the air-conditioning load is low.

In order to achieve the above object, the present invention provides an expansion valve according to claim 1.

Preferably, the bypass passage communicates the valve chamber and the first passage. Moreover, the bypass passage communicates the valve chamber and the second passage.

In a more preferable example, the sensing means is a pressure sensor or a temperature sensor.

Moreover, the expansion valve according to the present invention is equipped in an air conditioner for decompressing and expanding a refrigerant and supplying the same to an evaporator, said expansion valve including a valve body comprising a first passage through which said refrigerant being transferred to said evaporator travels and a second passage through which said refrigerant returning from said evaporator travels, a valve chamber equipped in said first passage into which said refrigerant enters, a bypass passage for communicating said valve chamber and said first or said second passage, an electromagnetic valve for opening or closing said bypass passage, and a pressure switch equipped to said second passage, wherein said pressure switch detects the reduction of pressure of said refrigerant inside said second passage, and operates said electromagnetic valve to open said bypass passage.

Preferably, the electromagnetic valve is equipped with a plunger and a pilot valve being opened and closed by the end portion of said plunger, said pilot valve being operated to open or close a conduit equipped within said bypass passage.

The expansion valve according to the present invention defined as above realizes a valve which is capable of supplying a minimum amount of refrigerant to the refrigeration cycle even when the valve is nearly or completely closed.

### BRIEF DESCRIPTION OF THE DRAWINGS

FIG. 1 is a cross-sectional view showing one embodiment of the expansion valve according to the present invention;
FIG. 2 is a right side cross-sectional view of FIG. 1;
FIG. 3 is a right side view of FIG. 2;
FIG. 4 is a cross-sectional view showing another embodiment of the expansion valve according to the present invention; and
FIG. 5 is a cross-sectional view showing yet another embodiment of the expansion valve according to the present invention.

### DETAILED DESCRIPTION OF PREFERRED EMBODIMENTS

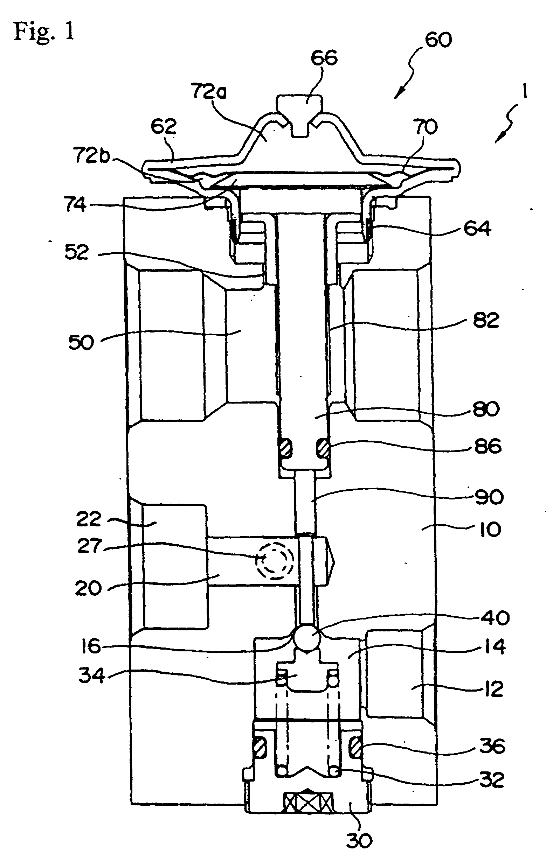

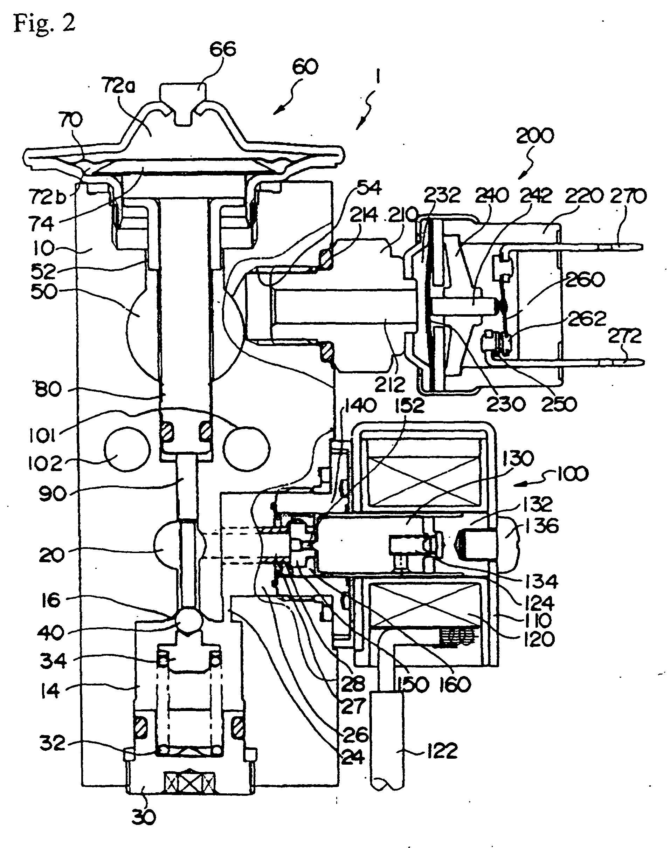

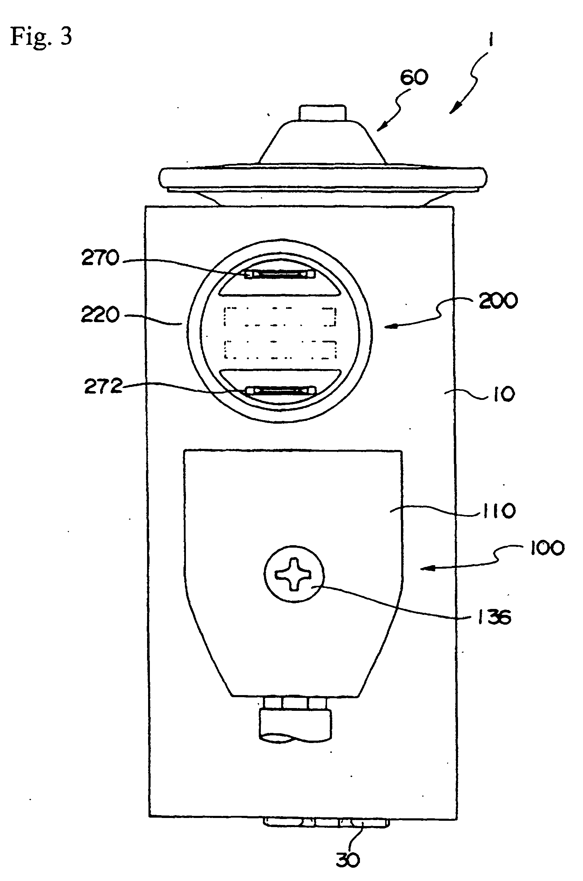

FIG. 1 is a cross-sectional view of the expansion valve according to the present invention showing a refrigerant passage in cross-section, FIG. 2 is a cross-sectional view corresponding to the right side view of FIG. 1, and FIG. 3 is a right side view of FIG. 2.

The expansion valve shown as a whole by reference number 1 has a substantially prismatic-shaped valve body 10. To the lower portion of the valve body 10 is equipped an entrance hole 12 through which a liquid-phase refrigerant supplied from a compressor of a refrigeration cycle travels. The entrance hole 12 is communicated to a valve chamber 14. A valve member 40 is supported through a support member 34 by a spring 32.

A nut member 30 is screwed and fixed to the opening portion formed to the valve chamber 14. By screwing on the nut member 30, the spring 32 is pre-loaded, which supports the valve member 40 through the support member 34 with a predetermined spring force. A seal member 36 is mounted onto the nut member 30 to seal the valve chamber 14.

The refrigerant in the valve chamber 14 travels through the opening portion between the valve member 40 and a valve seat 16 toward a first passage 20. The first passage 20 is communicated through an exit hole 22 to an evaporator not shown.

The refrigerant returning from the evaporator travels through a second passage 50 equipped to the valve body 10, and is circulated again to the compressor not shown. The refrigerant in the second passage is sent through a gap 52 toward a power element 60 mounted to the upper portion of the valve body 10, which acts as a driving mechanism of the valve member.

The power element 60 comprises a body 62 which is mounted to the valve body 10 by a screw portion 64. Further, the element 60 comprises a diaphragm 70 positioned inside the body 62, which defines an upper chamber 72a and a lower chamber 72b. A working fluid is filled inside the upper chamber 72, and sealed by a plug 66.

The diaphragm 70 is supported by a stopper 74. The stopper 74 is formed either integrally with a heat sensing shaft 80, or separately from the shaft 80. The heat sensing shaft 80 is for transmitting the temperature of a refrigerant flowing through the second passage 50 to the power element 60. A resin 82 having low heat conductivity may be coated to the outer surface of the heat sensing shaft 80, so as to adjust the shaft 80 to have the necessary heat conductivity.

A valve drive member 90 is contacted to the lower area of the heat sensing shaft 80, which biases the valve member 40 in the direction separating from the valve seat 16. The heat sensing shaft 80 is equipped with an o-ring 86 acting as a sealing member preventing communication between the first passage 20 and the second passage 50.

The expansion valve 1 is formed as explained above, so according to the operating position of the diaphragm 70 set according to the pressure and the temperature of the refrigerant traveling through the second passage 50, the heat sensing shaft 80 and the valve member driving element 90 is moved, and the gap between the valve member 40 and the valve seat 16 is adjusted.

When the heat load of the evaporator is great, the gap between the valve member 40 and the valve seat 16 is widened, so that a large amount of refrigerant is supplied to the evaporator, and in contrast, when the heat load is small, the flow of the refrigerant is reduced.

When the heat load is extremely small, the valve member 40 is either in a closed state or a nearly closed state, and there is fear that the refrigerant circulating through the whole refrigeration cycle may be insufficient to lubricate the compressor and the like sufficiently.

The expansion valve according to the present invention is equipped with a function to supply the minimum necessary amount of refrigerant through a bypass passage toward the evaporator even when the valve member is in a closed state or in a nearly closed state.

As shown in FIGS. 2 and 3, to the side surface of the valve body 10 are mounted an electromagnetic valve 100 and a pressure switch 200.

The electromagnetic valve 100 comprises a casing 110 and amounting member 140 connected to the casing 110. The mounting member 140 is fixed through a screw portion to an opening 26 with a bottom formed to the valve body 10. The opening 26 with a bottom is communicated through a narrow hole 24 to the valve chamber 14.

Therefore, the refrigerant supplied to the valve chamber 14 is introduced to the opening 26 with a bottom through the narrow hole 24, and a bypass passage to the first passage 20 is formed through a passage 27.

The electromagnetic valve 100 comprises a coil 120 placed inside the casing 110, and power is supplied thereto through a cord 122. A cylinder 124 is positioned in the center area of the casing 110, and a plunger 130 is slidably inserted thereto. A stopper 132 is fixed to the outside of the cylinder by a screw 136. The stopper 132 biases the plunger 130 through a spring 134 so that the plunger is biased away from the stopper 132 regularly.

A pilot valve 150 is slidably mounted to the tip of the plunger 130. The pilot valve 150 has a valve hole 152 formed to the center area thereof.

A pipe-like conduit 28 is formed to the center of the opening 26 with a bottom. A passage 27 of the inner diameter of the conduit 28 communicates the opening 26 and the first refrigerant passage 20 of the valve body.

The pilot valve 150 is regularly pressed by the plunger 130, and the plunger 130 shuts the valve hole 152 of the pilot valve 150 with its tip portion. Refrigerant from the opening 26 is introduced to a backing pressure chamber 160 formed outside the pilot valve 150, and by the backing pressure, the pilot valve 150 is pressed against the opening of the conduit 28 and closes its passage 27.

When power is supplied to the coil 120 of the electromagnetic valve 100, the plunger 130 is pulled back toward the stopper 132 by the magnetic force of the coil 120. When the tip of the plunger 130 moves away from the valve hole 152 of the pilot valve 150, the valve hole 152 is opened, and the refrigerant in the backing pressure chamber 160 travels through the valve hole 152 into the passage 27 of the conduit 28, and the pressure difference is reduced. The pilot valve 150 thereby moves away from the end of the conduit 28, and the refrigerant in the opening 26 flows toward the first passage 20.

By such function, the refrigerant may be supplied to the evaporator even when the valve means 40 is in a position closing the valve seat 16.

An opening 54 communicated to the second refrigerant passage 50 is formed to the valve body 10, and a pressure switch 200 is mounted thereto.

The pressure switch 200 comprises a mounting base 210 and a switch case 220, and the switch 200 is screwed onto the opening 54 through a seal member 214 of the mounting base 210. The mounting base 210 comprises a penetrating hole 212, through which the refrigerant in the second passage 50 travels.

A fixed contact 250 and a movable contact 262 supported by a spring 260 is mounted inside the switch case 220.

A diaphragm 230 sandwiched inside the switch case 220 operates the spring 260 through a working member 242 mounted slidably to the supporting member 240.

The refrigerant in the second passage 50 of the valve body 10 is introduced through the opening 54 and the penetrating hole 212 of the mounting base 210 to a pressure chamber 232 formed to one side of the diaphragm. When the pressure of the refrigerant in the pressure chamber 232 is larger than a predetermined value, the center of the diaphragm 232 moves toward the right side of the drawing. By the movement, the working member 242 pushes the spring 260, and separates the movable contact 262 from the fixed contact 250.

Therefore, while the pressure of the refrigerant in the second passage 50 is higher than the predetermined value, the contacts are opened, and no current flows between lead wires 270 and 272.

When the heat load of the evaporator is reduced, the valve member 40 moves in the direction closing the valve, and the pressure of the refrigerant flowing through the second passage 50 decreases. Upon receiving such change in pressure, the diaphragm 230 of the pressure switch 200 moves toward the left side of the drawing. By the movement, the spring 260 moves the movable contact 262 so that it contacts the fixed contact 250.

When contacts 250 and 262 are closed, current flows through the lead wires 270 and 272. The current is transferred through a controller not shown in the drawing to the electromagnetic valve 100. The coil 120 of the electromagnetic valve 100 is biased and opens the pilot valve 150, and thereby, the refrigerant in the valve chamber 14 is flown into the first passage 20 through the conduit 28. Further, in FIG. 3, reference numbers 101 and 102 denote bolt holes for mounting the expansion valve to a predetermined position.

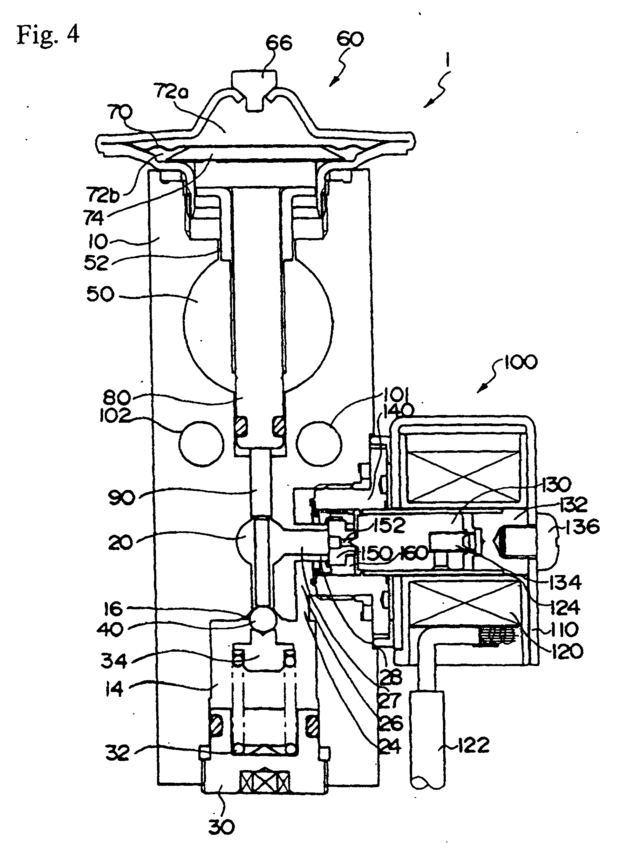

In the above explanation, a case is explained where the change in pressure during a low load level is sensed by the pressure switch for opening the bypass passage. However, the present invention is not limited to using a pressure switch for sensing the change in pressure, but a pressure sensor may be utilized instead of the pressure switch for opening the bypass passage by the output of the pressure sensor. FIG. 4 is a cross-sectional view showing such embodiment of the present invention, wherein the change in pressure during low load is sensed before opening the bypass passage. That is, the pressure switch utilized in the embodiment shown in FIG. 2 is not used for operating the electromagnetic valve. In FIG. 4, the same reference numbers as FIG. 2 denote the same or equivalent members. The change in pressure is sensed by a pressure sensor (not shown) which is for example mounted on a discharge pipe of a compressor for sensing the discharge pressure of the compressor. The sensed result is outputted to a controller (not shown), where it is determined whether the output is a predetermined air-conditioning load or not. When the air-conditioning load is of a predetermined value, the output from the controller is inputted to the electromagnetic valve 100, and power is supplied to the electromagnetic valve 100. After the power is supplied, the refrigerant flows through a bypass passage into the first passage by the same operation as the valve shown in FIG. 2.

Moreover, the present invention may also be applied to a valve where the change in temperature during the low load is detected, instead of the change in pressure detected by the pressure sensor explained above, for opening the bypass passage. In other words, a temperature sensor (not shown) for sensing the temperature at the blow-out opening of the air conditioner on a vehicle and the like may be equipped to the electromagnetic valve 100, and the output from the temperature sensor is inputted to a controller (not shown). It is determined by the controller whether the air conditioning load is in a predetermined range or not, and if the load is in a predetermined range, the output from the controller is inputted to the electromagnetic valve 100, and power is supplied to the valve 100. After that, similar to the operation of FIG. 2, the refrigerant will be flown into the first passage through the bypass passage.

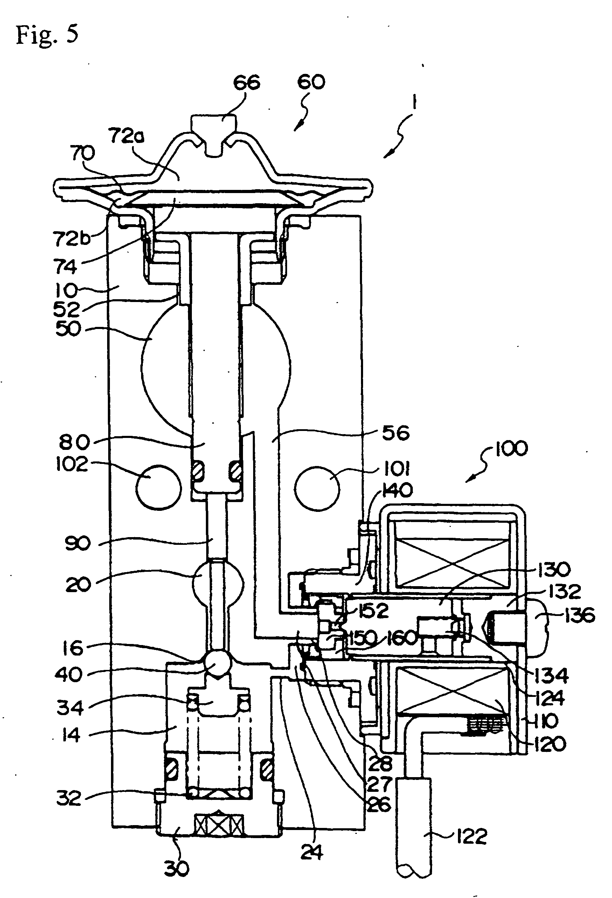

Even further, according to the present invention, a bypass passage communicating to the first passage is formed to supply the refrigerant to the evaporator. However, the invention is not limited to such example, and may also be applied to cases where the bypass passage is communicated to the second passage, circulating the refrigerant without supplying the refrigerant to the evaporator. FIG. 5 is a cross-sectional view showing such embodiment of the present invention, wherein a passage 56 for communicating the second passage 50 and the bypass passage is formed within the valve body 10.

In FIG. 5, the same reference numbers as the embodiment shown in FIG. 4 denote the same or equivalent members. During a predetermined air-conditioning load, the output from the controller is inputted to the electromagnetic valve 100, and power is supplied to the valve 100. As a result, by the same operation as the embodiment of FIG. 2, refrigerant flows through a bypass passage formed by the narrow hole 24, the opening 26 with a bottom and the passage 27, and travels through a passage 56 toward the second passage 50.

Further, a pressure switch 200 may be utilized in the embodiment of FIG. 5, similarly as in the embodiment of FIG. 2. That is, a pressure switch 200 may be mounted to the valve body 10 through a mounting base 210, and when the contacts of the pressure switch 200 is closed, the refrigerant flows through the passage 56 into the second passage 50 by the same operation as the embodiment of FIG. 2.

According to the expansion valve of the present invention, the minimum necessary amount of refrigerant may be circulated through the bypass passage even when the air-conditioning load becomes very low and the valve is in a closed or nearly closed state. Therefore, the present expansion valve prevents the amount of refrigerant circulating in the refrigeration cycle from becoming too small, which may lead to insufficient lubrication of the compressor and the like.

Moreover, since sufficient lubrication of the equipment in the refrigeration cycle is secured by the present expansion valve, the reliability of the refrigeration cycle may be improved.

## Claims

1. An expansion valve (1) for decompressing and expanding a refrigerant and supplying the same to an evaporator, wherein:
a valve body (10) comprising a first passage (20) through which said refrigerant being transferred to said evaporator travels, a second passage (50) through which said refrigerant returning from said evaporator toward a compressor travels, and a valve chamber (14) and a valve member (40) equipped in said first passage (20) into which said refrigerant enters, is further equipped with a bypass passage for supplying said refrigerant from said valve chamber (14) to said compressor, and a control valve (100) for opening and closing said bypass passage, said control valve (100) being operated so as to open said bypass passage according to the output from a sensing means for detecting a predetermined air-conditioning load,
**characterized in that** said control valve (100) is an electromagnetic valve which supplies the minimum necessary amount of refrigerant through the bypass toward the evaporator even when the valve member (40) is in a closed state or in a nearly closed state.

2. An expansion valve according to claim 1, wherein said bypass passage communicates said valve chamber (14) and said first passage (20).

3. An expansion valve according to claim 2, wherein said bypass passage communicates said valve chamber (14) and said second passage (50).

4. An expansion valve according to claim 2 or claim 3, wherein said sensing means is a pressure sensor.

5. An expansion valve according to claim 2 or claim 3, wherein said sensing means is a temperature sensor.

6. An expansion valve according to claim 1, wherein said sensing means is a pressure switch (200) equipped to said second passage (50), the pressure switch (200) detects the reduction of pressure of said refrigerant inside said second passage (50), and operates said electromagnetic valve (100) to open said bypass passage.

7. An expansion valve according to claim 1 or 6, wherein said electromagnetic valve (100) is equipped with a plunger (130) and a pilot valve (150) being opened and closed by the end portion of said plunger (130), said pilot valve (150) being operated to open or close a conduit (28) formed within said bypass passage.

## Patentansprüche

1. Entspannungsventil (1) zum Dekomprimieren und Ausdehnen eines Kältemittels und zur Zuführung desselben zu einem Verdampfer, bei welchem ein Ventilkörper (10) mit einem ersten Kanal (20), durch welchen das dem Verdampfer zugeführte Kältemittel strömt, einem zweiten Kanal (50), durch welchen das von dem Verdampfer zu einem Kompressor zurückkehrende Kältemittel strömt, und einer Ventilkammer (14) und einem Ventilelement (40), die in dem ersten Kanal (20) angeordnet sind, in welchen das Kältemittel eintritt, ferner mit einem Umgehungskanal zur Zuleitung des Kältemittels von der Ventilkammer (14) zum Kompressor und mit einem Steuerventil (100) zum Öffnen und Schließen des Umgehungskanals ausgestattet ist, welches Steuerventil (100) derart betrieben wird, dass der Umgehungskanal entsprechend der Ausgabe einer Meßeinrichtung zur Bestimmung einer vorbestimmten Klimaanlagen-Last geöffnet wird, **dadurch gekennzeichnet, dass** das Steuerventil (100) ein elektromagnetisches Ventil ist, welches die erforderliche Mindestmenge von Kältemittel durch den Umgehungskanal zum Verdampfer selbst dann zuleitet, wenn sich das Ventilelement (40) in einer geschlossenen Stellung oder in einer nahezu geschlossenen Stellung befindet.

2. Entspannungsventil gemäß Anspruch 1, bei welchem der Umgehungskanal mit der Ventilkammer (14) und dem ersten Kanal (20) kommuniziert.

3. Entspannungsventil gemäß Anspruch 2, bei welchem der Umgehungskanal mit der Ventilkammer (14) und dem zweiten Kanal (50) kommuniziert.

4. Entspannungsventil gemäß Anspruch 2 oder Anspruch 3, bei welchem die Meßeinrichtung ein Drucksensor ist.

5. Entspannungsventil gemäß Anspruch 2 oder Anspruch 3, bei welchem die Meßeinrichtung ein Temperatursensor ist.

6. Entspannungsventil gemäß Anspruch 1, bei welchem die Meßeinrichtung ein Druckschalter (200) am zweiten Kanal (50) ist, welcher Druckschalter (200) die Verminderung des Drucks des Kältemittels innerhalb des zweiten Kanals (50) mißt und das elektromagnetische Ventil (100) zum Öffnen des Umgehungskanals betätigt.

7. Entspannungsventil gemäß Anspruch 1 oder Anspruch 6, bei welchem das elektromagnetische Ventil (100) mit einem Plungerkolben (130) und einem Steuerventil (150) versehen ist, welches durch den Endbereich des Plungerkolbens (130) geöffnet und geschlossen wird, und welches Steuerventil (150) zum Öffnen oder Schließen einer Leitung (28) innerhalb des Umgehungskanals betrieben wird.

## Revendications

1. Soupape d'expansion (1) pour décompresser et faire subir une expansion à un réfrigérant et délivrer celui-ci à un évaporateur, dans laquelle :
un corps de soupape (10) comprenant un premier passage (20) à travers lequel se déplace ledit réfrigérant qui est transféré audit évaporateur, un deuxième passage (50) à travers lequel se déplace ledit réfrigérant revenant à partir dudit évaporateur vers un compresseur, et une chambre de soupape (14) et un élément de soupape (40) disposés dans ledit premier passage (20) dans lequel entre ledit réfrigérant, comporte en outre un passage de dérivation pour délivrer ledit réfrigérant à partir de ladite chambre de soupape (14) audit compresseur, et une vanne de commande (100) pour ouvrir et fermer ledit passage de dérivation, ladite vanne de commande (100) étant actionnée de façon à ouvrir ledit passage de dérivation en fonction de la sortie d'un moyen de détection pour détecter une charge de climatisation prédéterminée,
**caractérisée en ce que** ladite vanne de commande (100) est une vanne électromagnétique qui délivre la quantité minimale nécessaire de réfrigérant par l'intermédiaire de la dérivation vers l'évaporateur même lorsque l'élément de soupape (40) est dans un état fermé ou dans un état quasiment fermé.

2. Soupape d'expansion selon la revendication 1, dans laquelle ledit passage de dérivation fait communiquer ladite chambre de soupape (14) et ledit premier passage (20).

3. Soupape d'expansion selon la revendication 2, dans laquelle ledit passage de dérivation fait communiquer ladite chambre de soupape (14) et ledit deuxième passage (50).

4. Soupape d'expansion selon la revendication 2 ou la revendication 3, dans laquelle ledit moyen de détection est un capteur de pression.

5. Soupape d'expansion selon la revendication 2 ou la revendication 3, dans laquelle ledit moyen de détection est un capteur de température.

6. Soupape d'expansion selon la revendication 1, dans laquelle ledit moyen de détection est un pressostat (200) disposé dans ledit deuxième passage (50), le pressostat (200) détectant la réduction de pression dudit réfrigérant à l'intérieur dudit deuxième passage (50), et actionnant ladite vanne électromagnétique (100) de façon à ouvrir ledit passage de dérivation.

7. Soupape d'expansion selon la revendication 1 ou 6, dans laquelle ladite vanne électromagnétique (100) est équipée d'un plongeur (130) et d'une soupape pilote (150) qui est ouverte et fermée par la partie d'extrémité dudit plongeur (130), ladite soupape pilote (150) étant actionnée pour ouvrir ou fermer un conduit (28) formé à l'intérieur dudit passage de dérivation.
